# EUROPÄISCHE PATENTSCHRIFT

(11) **EP 3 382 098 B1**
(45) Veröffentlichungstag und Bekanntmachung des Hinweises auf die Patenterteilung: **27.03.2019**
(21) Anmeldenummer: 17163505.5
(22) Anmeldetag: 29.03.2017
(51) Int. Cl.: E01C 19/48, E01C 19/00

(54) **STRASSENFERTIGER MIT HALTEVORRICHTUNG ZUM TRAGEN UND POSITIONIEREN EINER SENSOREINHEIT**
ROAD FINISHER WITH HOLDING DEVICE FOR HOLDING AND POSITIONING A SENSOR UNIT
FINISSEUSE DE ROUTE COMPRENANT UN DISPOSITIF DE RETENUE DESTINÉ À PORTER ET À POSITIONNER UNE UNITÉ DE CAPTEUR

(43) Veröffentlichungstag der Anmeldung: 03.10.2018
(73) Patentinhaber: Joseph Vögele AG, 67067 Ludwigshafen (DE)
(72) Erfinder: HERZBERG, Ingo, 74918 Angelbachtal (DE)
(74) Vertreter: Grünecker Patent- und Rechtsanwälte PartG mbB

(56) Entgegenhaltungen:
- EP-A1- 1 403 434
- EP-A1- 3 228 747
- CN-U- 203 629 600
- JP-A- H0 441 802

## Beschreibung

Die vorliegende Erfindung bezieht sich auf einen Straßenfertiger gemäß dem Oberbegriff des Anspruchs 1.

In der Praxis werden Straßenfertiger verwendet, um mittels einer daran angeordneten Einbaubohle neue Fahrbahndecken zu verbauen. Das Einbaumaterial dafür kommt aus einem Gutbunker des Straßenfertigers, welcher in Einbaurichtung gesehen vorne am Straßenfertiger angeordnet ist. Über eine Materialfördereinrichtung wird das Einbaumaterial aus dem Gutbunker heraus nach hinten unterhalb des Bedienstandes zur Einbaubohle hin transportiert, vor dieser mittels einer Verteilerschnecke ausgebreitet und schließlich unter der Einbaubohle mittels beheizter Verdichtungsaggregate zur neuen Fahrbahn verbaut.

Damit eine ebene Fahrbahn auf dem Untergrund, auf welchem sich der Straßenfertiger bewegt, verbaut werden kann, ist die Einbaubohle mittels höhenverstellbarer Bohlenholme am Chassis des Straßenfertigers befestigt. Die Nivellierung der Einbaubohle kann mittels einer Steuereinrichtung des Straßenfertigers geschehen. Dabei hängt die Nivellierung der Einbaubohle von der Oberflächenbeschaffenheit des Untergrunds bzw. von der Solldicke der zu verbauenden Fahrbahndecke ab.

Es ist bekannt, dass zum Nivellieren einer Einbaubohle eines Straßenfertigers am Straßenfertiger seitlich ein langgezogener starrer Messbalken befestigt ist, der eine Vielzahl von Sensoren einerseits über dem Untergrund, auf welchem sich der Straßenfertiger fortbewegt, sowie andererseits über der neu verlegten Einbauschicht hinter der Einbaubohle positioniert. Problematisch bei bekannten Messbalkenhalterungen ist, dass diese schwer und zeitaufwändig zusammenbaubar sind und insbesondere der Anbau am Straßenfertiger viel Geschick und meist mehrere Personen erfordert.

Beispielsweise zeigt DE 602 26 237 T2 eine Messbalkenvorrichtung mit übereinander angeordneten Balken, die teleskopartig entlang des Straßenfertigers horizontal ausziehbar sind, um seitlich des Straßenfertigers über dem Untergrund Sensoren für eine Höhenmessung zur Regelung eines Nivelliersystems des Straßenfertigers zu positionieren. Die jeweiligen teleskopartigen Balkensegmente lassen sich an einer gewünschten Stelle mittels darauf vorgesehener Verankerungen fixieren. Nachteilig daran ist, dass die teleskopartigen Messbalken insgesamt ein hohes Gewicht aufbringen und daher nur mittels großen Kraftaufwands horizontal ausrichtbar sind, um die jeweiligen Höhenmesssensoren an einer gewünschten Stelle oberhalb des Untergrunds zu positionieren. Weiterhin ist die teleskopartige Messbalkenkonstruktion teuer in der Herstellung.

US 5,975,473 A offenbart eine seitlich an einem Straßenfertiger befestigte Messbalkenvorrichtung. Die Messbalkenvorrichtung ist über gelenkige Schwenkarme an einem Bohlenholm des Straßenfertigers befestigt. Ferner umfasst die Messbalkenvorrichtung einen seitlich entlang des Straßenfertigers getragenen Messbalken mit einem Mittelbalken sowie an dessen Enden befestigten Erweiterungsbalken. Zumindest zum Positionieren der am Mittelbalken befestigten Höhenmesssensoren muss jedoch im Wesentlichen die gesamte Messbalkenvorrichtung bewegt werden, was die Positionierung der Sensoren oberhalb des Untergrunds erschwert.

DE 691 26 017 T2 offenbart einen Straßenfertiger mit einem daran befestigten Messbalken, der lediglich an vorbestimmten Stellen oberhalb des Untergrunds Höhenmesssensoren positioniert. Eine Verlagerung der Höhenmesssensoren scheint dort nicht möglich zu sein, sodass der Messbalken nicht an unterschiedlichen Straßenfertigermodellen einsetzbar ist.

Die nachveröffentlichte europäische Patentanmeldung Nr. 16 164 466.1 der Joseph Vögele AG beschreibt eine Haltevorrichtung zum Tragen und Positionieren mindestens einer Sensoreinheit, die mittels einer krallenartigen Halterung an einem Montagebalken befestigbar ist. Zum Positionieren der Sensoreinheit entlang des Montagebalkens wird die krallenartige Halterung aus ihrer Klemmbefestigung gelöst und seitlich an eine gewünschte Stelle entlang des Montagebalkens versetzt. Das Versetzen der Halterung entlang des Montagebalkens ist gut möglich, wobei insbesondere das Verlegen des Montagebalkens von einer Seite des Straßenfertigers auf die andere Seite zusätzlichen Montageaufwand erfordert, um die Halterung entsprechend am Montagebalken zu befestigen.

Die CN 203 629 600 U offenbart einen Straßenfertiger mit einer Einbaubohle, an welcher eine Messvorrichtung befestigt ist. Die Messvorrichtung umfasst ein Sensorrohr mit einem daran befestigten Sensor und ist mittels einer Halterung an einer Führungsstange verschiebbar befestigt.

JP H04 41802 A offenbart einen Straßenfertiger, an dessen Bohlenverbund eine Messvorrichtung befestigt ist. Die Messvorrichtung weist eine Sensoreinheit auf, die entlang eines Trägers horizontal verstellbar gelagert ist.

EP 1 403 434 A1 offenbart eine horizontal teleskopartig verstellbare Messbalkenkonstruktion, die am Chassis eines Straßenfertigers zum Tragen mehrerer Sensoreinheiten befestigt ist.

Die nachveröffentlichte EP 3 228 747 A1 (A1-Veröffentlichung der oben gennanten Anmeldeschrift Nr. 16164466.1) offenbart einen Straßenfertiger mit einem Tragarmmodul, wobei mittels einer Klemmvorrichtung ein Sensormodul an unterschiedlichen Positionen des Tragarmmoduls befestigbar ist.

Angesichts der herkömmlichen Lösungen gemäß dem Stand der Technik ist es die Aufgabe der Erfindung, einen Straßenfertiger mit einer Haltevorrichtung zur Verfügung zu stellen, welche sich für einen besonders flexiblen Einsatz zur schnellen Montage an unterschiedlichen Straßenfertigertypen eignet, sich weiterhin durch eine einfache und unkomplizierte Montierbarkeit am Straßenfertiger auszeichnet, also insgesamt ergonomisch bedienbar ist, und darüber hinaus für eine Vielzahl von Halterungsmöglichkeiten für daran befestigte Module, insbesondere Messeinheiten, einsetzbar ist. Insbesondere soll es die Haltevorrichtung einem Bediener ermöglichen, die jeweiligen daran befestigten Höhenmesssensoren problemlos an einer gewünschten Stelle oberhalb des Untergrunds bzw. oberhalb der verbauten Fahrbahndecke zu positionieren.

Einen Straßenfertiger mit einer derartigen Haltevorrichtung gibt Anspruch 1 her. Verbesserte Weiterbildungen der Erfindung sind Gegenstand der Unteransprüche.

Der erfindungsgemäße Straßenfertiger ist mit einer an einem Chassis des Straßenfertigers befestigten, höheneinstellbaren Einbaubohle zum Verlegen einer Einbauschicht sowie mindestens einer Haltevorrichtung zum Tragen und Positionieren mindestens einer Sensoreinheit ausgestattet, wobei die Haltevorrichtung mindestens ein Tragarmmodul, mindestens ein Sensormodul, umfassend die Sensoreinheit, sowie mindestens eine am Tragarmmodul verschiebbar positionierbare Kulisse aufweist, an welcher das Sensormodul befestigbar ist und welche das Sensormodul am Tragarmmodul befestigt.

Erfindungsgemäß verfügt das Sensormodul über eine Halterung mit einer Befestigungsplatte, welche werkzeuglos lösbar an der Kulisse befestigt ist. Dadurch ist es möglich, das Sensormodul, einschließlich dessen Halterung und der daran befestigten Sensoreinheit, aus der Kulisse auszubauen, während die Kulisse am Tragarmmodul befestigt bleibt. Dadurch ergeben sich insbesondere im Zusammenbau der Haltevorrichtung sowie bei einer Montage derselben am Straßenfertiger Vorteile, die dazu führen, dass der Bediener die jeweiligen Sensoreinheiten einfacher, schneller und sicherer an einer vorbestimmten Stelle montieren kann.

Bei den jeweiligen Sensoreinheiten handelt es sich im Übrigen um sehr kostspielige sowie sensible Messinstrumente, welche sich durch die vorliegende Erfindung sicherer als bei vorbekannten Lösungen befestigen lassen. Die zum Teil als Befestigungsplatte ausgebildete Halterung des Sensormoduls bietet dafür dem Bediener eine Art Hilfestellung, um das Sensormodul ordnungsgemäß an der Kulisse zu befestigen. Ferner lässt sich die Kulisse ohne das Risiko, vom Tragarmmodul herunterzufallen, hervorragend an einer gewünschten Position entlang des Tragarmmoduls sichern, sei es mit daran befestigtem Sensormodul oder sei es ohne mit dem Sensormodul verbunden zu sein.

Vorzugsweise bilden die Kulisse und das Tragarmmodul eine Linearführung aus. Dadurch lässt sich die Kulisse zielgerichtet und präzise entlang des Tragarmmoduls verlagern. Dabei verbleibt die Kulisse am Tragarmmodul, ohne davon entkoppelt zu werden. Außerdem kann dadurch das Risiko erheblich reduziert werden, dass sich die Kulisse unerwünscht vom Tragarmmodul löst. Insgesamt wird es durch die Linearführung einem Bediener erheblich erleichtert, die Kulisse entlang des Tragarmmoduls zu verschieben und zielgerichtet zu positionieren.

Vorzugsweise ist die Kulisse als Schlitten auf einem als Führung ausgebildeten Balken des Tragarmmoduls verschiebbar. Dadurch ergibt sich eine besondere Hilfestellung für den Bediener, wenn er das Sensormodul an einer gewünschten Stelle am Tragarmmodul befestigen möchte. Er muss dabei lediglich die Kulisse entlang des Balkens verschieben, während der Balken dem Bediener das Gewicht der Kulisse sowie des gegebenenfalls daran befestigten Sensormoduls abnimmt.

Vorzugsweise ist die Kulisse bezüglich des Balkens als eine Rahmeneinheit ausgebildet. Dadurch kann verhindert werden, dass die Kulisse vom Tragarmmodul herunterfällt. Außerdem ist die Kulisse als Rahmeneinheit besser entlang des als Führung ausgebildeten Balkens des Tragarmmoduls verschiebbar. Ferner kann dadurch eine stabile Befestigung des Sensormoduls verbessert werden.

Vorzugsweise weist die Kulisse mindestens eine Laufrolle auf. Dadurch lässt sich die Kulisse noch leichter entlang des Tragarmmoduls verschieben. Vorzugsweise umfasst die Laufrolle eine aus Kunststoff, beispielsweise aus Gummi hergestellte Ummantelung, um eine gewisse Dämpffunktion für die Kulisse sowie das daran gekoppelte Sensormodul bereitzustellen.

Vorzugsweise besitzt die Kulisse zur lösbaren Befestigung der Halterung des Sensormoduls eine zum Chassis des Straßenfertigers hingewandte Aufnahme und/oder eine dem Chassis des Straßenfertigers abgewandte Aufnahme. Dies bringt den technischen Vorteil, dass das Sensormodul beidseitig bzw. an unterschiedlichen Seiten der Kulisse befestigbar ist, was zur Folge hat, dass sich die Haltevorrichtung problemlos an beiden Seiten des Straßenfertigers befestigen lässt.

Erfindungsgemäß ist das Sensormodul relativ zur Horizontalen in verschiedenen Montagewinkeln an der Kulisse befestigbar. Dadurch kann das Sensormodul selbst an einem zur Horizontalen geneigten Tragarmmodul derart befestigt werden, dass es die Sensoreinheit vertikal oberhalb des Untergrunds ausrichtet. Es lässt sich somit eine Schräglage des Tragarmmoduls relativ zur Horizontalen ausgleichen. Diese Art der Befestigung kann insbesondere dann zum Einsatz kommen, wenn das Tragarmmodul stufenförmig ausgebildet ist.

Weiter von Vorteil ist, wenn die Kulisse integral an der Haltevorrichtung montiert ist. Dadurch reduziert sich insgesamt die Anzahl einzelner Komponenten der Haltevorrichtung und die Kulisse lässt sich zumindest werkzeuglos nicht vom Tragarmmodul lösen, sodass die Kulisse nicht auf der Baustelle verloren werden kann und darüber hinaus zusätzlich für den Bediener die Montage des Sensormoduls erleichtert wird.

Bevorzugterweise umfasst die Halterung einen drehbar an der Befestigungsplatte gelagerten Schließhebel, welcher dazu konfiguriert ist, die Halterung an der Kulisse zu sichern. Vorzugsweise ist der Schließhebel auf einer zur Kulisse abgewandten Seite der Befestigungsplatte gelagert, wenn die Halterung an der Kulisse befestigt ist. Der Schließhebel lässt sich dadurch einfach von einem Bediener betätigen, sodass keinerlei Schwierigkeiten vorliegen, um die Befestigungsplatte an der Kulisse zu sichern bzw. davon abzubauen.

Vorzugsweise ist der Schließhebel mittels Federkraft in eine geschlossene Stellung vorgespannt, wobei der Schließhebel entgegen der Federkraft aus der geschlossenen Stellung heraus in eine offene Stellung bewegbar ist. Die federbelastete Vorspannkraft sorgt dafür, dass der Schließhebel sicher und zuverlässig in der geschlossenen Stellung bleibt, und zwar auch dann, wenn der Straßenfertiger über eine holprige Fahrbahn fährt, bzw. Erschütterungen auf die Haltevorrichtung wirken. Das Sensormodul bleibt somit stets sicher befestigt. Außerdem bietet diese Art der Verriegelung eine vorteilhafte Möglichkeit für den Bediener, um die Befestigungsplatte werkzeuglos und zügig von der Kulisse abzubauen.

Eine besonders günstige Lagerung des Schließhebels ergibt sich, wenn eine Drehachse des Schließhebels orthogonal zu einer Plattenebene der Befestigungsplatte ausgerichtet ist. Dies bewirkt, dass die Halterung insgesamt kompakt ausgebildet ist.

Gemäß einer besonders vorteilhaften Ausführungsform verfügt die Kulisse über mindestens einen unteren und mindestens einen oberen Montagevorsprung, wobei der untere Montagevorsprung an einem Montagekranz und der obere Montagevorsprung in einer Montageöffnung der Befestigungsplatte befestigbar sind. Der untere sowie der obere Montagevorsprung bilden jeweils ein hervorragendes Befestigungslager für die Befestigungsplatte aus, sodass diese daran präzise in einer vorbestimmten Ausrichtung an der Kulisse befestigbar ist. Hinzu kommt, dass der Bediener problemlos anhand des unteren sowie des oberen Montagevorsprungs erkennen kann, wie die Befestigungsplatte ordnungsgemäß an der Kulisse zu befestigen ist.

Vorzugsweise umfasst der Montagekranz mehrere Vertiefungen in radialer Anordnung, die jeweils einzeln am unteren Montagevorsprung koppelbar sind, um die Halterung in verschiedenen Montageausrichtungen an der Kulisse zu befestigen. Dadurch kann das Sensormodul derart an der Kulisse befestigt werden, dass eine Neigung des Tragarmmoduls relativ zur Horizontalen derart ausgleichbar ist, dass das Sensormodul im Wesentlichen vertikal oberhalb des Untergrunds positioniert ist.

Von Vorteil ist auch, wenn die Halterung mindestens eine Klemmvorrichtung besitzt, die für eine vorbestimmte Klemmkraft ausgebildet ist, wenn die Klemmvorrichtung in einer geschlossenen Stellung ist. Dies trägt dazu bei, dass die Klemmvorrichtung unabhängig von einer Betätigungskraft des Einstellers in der geschlossenen Stellung gleichbleibende Haltekräfte auf die zu haltenden Komponente, insbesondere auf ein daran gekoppeltes Sensorrohr, ausübt. Daraus folgt, dass ein Überspannen an den Koppelstellen vermieden werden kann und sich die Klemmvorrichtung immer unter Aufbringen ähnlicher Betätigungskräfte öffnen und schließen lässt.

Vorzugsweise ist die Haltevorrichtung als modularer Baukasten leicht ausbaufähig und kann an verschiedenen Straßenfertigertypen für diverse Einsatzmöglichkeiten mittels spezifischer Sensortechnik ausgestattet sein. Den unterschiedlichen Konfigurationsmöglichkeiten kommt bei der Erfindung insbesondere die ergonomische Handhabe der Kulisse sowie der daran koppelbaren Halterung entgegen.

Die Haltevorrichtung profitiert insbesondere auch davon, wenn sie werkzeuglos am Straßenfertiger montierbar ist und eine für den Verwendungszweck spezifische Einstellung ebenfalls ohne die Verwendung von Werkzeug möglich ist.

Vorzugsweise umfasst die Kulisse eine Klemmeinheit, die derart konfiguriert ist, dass sie die Kulisse relativ zum Tragarmmodul an einer vorbestimmten Position sichern kann. Vorteilhaft ist es, wenn die Klemmeinheit für eine vorbestimmte Klemmkraft ausgebildet ist, wenn sie in einer geschlossenen Stellung ist. Die Klemmeinheit bildet vorzugsweise eine Schnellspanneinheit aus. Vorzugsweise profitiert die Klemmeinheit davon, dass sie werkzeuglos vom Einsteller zwischen einer geöffneten und der geschlossenen Stellung bewegbar ist.

Vorzugsweise umfasst die Klemmeinheit ein Hebelklemmgetriebe mit einem Bedienhebel zum Öffnen und Schließen der Klemmeinheit, einem Stützhebel sowie einem Klemmhebel, der eine vorbestimmte Klemmkraft zum Befestigen der Kulisse am Tragarmmodul aufbringt. Insbesondere kann der Bediener beim Öffnen und Schließen der Klemmeinheit am Bedienhebel, wenn dieser einen maximalen Druckpunkt erreicht, d. h. um einen vorbestimmten Winkel aus der geöffneten oder geschlossenen Stellung heraus bewegt wurde, eine Maximalkraft spüren, wobei insbesondere beim Schließvorgang nach dem Erreichen dieser Kraft das Hebelklemmgetriebe gewissermaßen selbstwirkend, jedenfalls ohne großen Kraftaufwand vollends in die geschlossene Stellung bringbar ist. Dies spürt der Bediener dadurch, dass der Bedienhebel gewissermaßen in die geschlossene Stellung einschnappt. Ferner verhindert diese am Hebelklemmgetriebe vorliegende Maximalkraft um den Druckpunkt, dass sich das Hebelklemmgetriebe selbsttätig aus der geschlossenen Stellung öffnet. Einen ähnlichen Mechanismus können auch andere Klemmeinheiten der Haltevorrichtung haben, sodass insgesamt einem Einsteller der Zusammenbau der Haltevorrichtung bzw. deren Befestigung am Straßenfertiger erheblich erleichtert werden kann.

Vorzugsweise umfasst die Haltevorrichtung einen Mittelbalken, der als Teil des Tragarmmoduls auf eine vertikale Projektionsebene projiziert zur Horizontalen geneigt am Straßenfertiger befestigbar ist. Trotz seiner geneigten Ausrichtung lässt sich darauf die Kulisse gut führen sowie das Sensormodul in einer gewünschten Lage befestigen.

Bevorzugterweise umfasst die Haltevorrichtung ferner mindestens einen Erweiterungsbalken für den Mittelbalken und mindestens eine Befestigungseinheit, die den Erweiterungsbalken an einem Ende des Mittelbalkens lösbar befestigt. Insbesondere sind der Mittelbalken und der Erweiterungsbalken mittels der Befestigungseinheit in vertikaler Projektionsebene betrachtet relativ zu einander in einem ersten Montagewinkel und in mindestens einem weiteren Montagewinkel miteinander verbindbar.

Vorzugsweise können der Mittelbalken und die an seinen Enden befestigten Erweiterungsbalken eine Stufenform ausbilden. Der gestufte Aufbau bietet beim Einbau großer Einbaubreiten den wesentlichen Vorteil, dass die Haltevorrichtung nicht mit anderen Komponenten des Straßenfertigers, beispielsweise Bohlenausziehteilen, Kanalblechen und/oder Halterungen dafür, kollidiert. Beim Einbau großer Einbaubreiten können Ausziehteile der Einbaubohle und/oder Kanalbleche, die bezüglich seitlichen Verteilerschnecken in Fahrtrichtung gesehen vor den Ausziehteilen angeordnet sind, mittels auskragender Stützstangen vertikal und horizontal fixiert werden. Der Stufenaufbau der Haltevorrichtung ermöglicht dabei die Verwendung solcher Stützstangen, wobei die Haltevorrichtung selbst nicht durch die Stützstangen in ihrer Funktion gestört wird. Dies wird dadurch ermöglicht, dass der gestufte Aufbau der Haltevorrichtung dafür sorgt, dass die Haltevorrichtung den Bohlenverbund des Straßenfertigers überbrückt.

Vorzugsweise verfügt das Sensormodul über ein Sensorrohr, welches zur Befestigung an der Halterung ausgebildet ist und an dessen zur Halterung abgewandten Ende eine Sensoraufnahme vorgesehen ist. Vorzugsweise kann die Sensoreinheit in der Sensoraufnahme anhand einer Feder-Nut-Verbindung aufgenommen werden. Dadurch lässt sich die Sensoreinheit zielgenau zur Befestigung in die Sensoraufnahme führen und ist in dieser ordnungsgemäß oberhalb des Untergrunds ausgerichtet. Gemäß einer Variante ist das Sensorrohr lösbar an der Halterung des Sensormoduls befestigt.

Vorteilhaft ist, wenn die Sensoreinheit mittels einer vorzugsweise als Hebelklemmgetriebe ausgebildeten Klemmeinheit am Sensormodul gegen Drehung fixierbar ist. Dadurch ließe sich ein Sensor der Sensoreinheit stabil oberhalb des Untergrunds positionieren, was für ein besseres Messergebnis sorgen würde.

Vorzugsweise ist die Klemmeinheit der Sensoraufnahme als Exzenterschnellspanner ausgebildet, wodurch sich die Sensoreinheit besonders feinfühlig in der Sensoraufnahme befestigen lässt.

Vorzugsweise sind die jeweiligen Balkensegmente der Haltevorrichtung als hohles Formprofil ausgebildet. Dabei können die jeweiligen Balkensegmente als Aluminiumprofile ausgebildet sein, wodurch sich das Gesamtgewicht der Haltevorrichtung erheblich reduzieren lässt.

Vorteilhafte Ausführungsformen der Erfindung werden anhand der folgenden Figuren erläutert.

Es zeigen:
- Fig. 1: einen Straßenfertiger zum Verbau einer Fahrbahndecke mit einer Haltevorrichtung zum Tragen und Positionieren mehrerer Sensoren,
- Fig. 2: ein vergrößert dargestelltes Balkensegment der Haltevorrichtung mit daran befestigter Kulissenführung für das Sensormodul,
- Fig. 3: eine Schnittdarstellung entlang des in Figur 2 gezeigten Balkensegments,
- Fig. 4: eine Draufsicht der in Figur 2 gezeigten Anordnung,
- Fig. 5: einen Befestigungsvorgang der Halterung an der Kulisse,
- Fig. 6: eine an der Kulisse befestigte Halterung zum vertikalen Ausrichten des Sensormoduls,
- Fig. 7: eine Perspektivdarstellung der in Figur 2 dargestellten Anordnung, und
- Fig. 8: eine Befestigung der Kulisse bzw. des Sensormoduls an einem Balkensegment mit geneigter Ausrichtung in perspektivischer Darstellung.

Gleiche Komponenten sind in den Figuren durchgängig mit gleichen Bezugszeichen versehen.

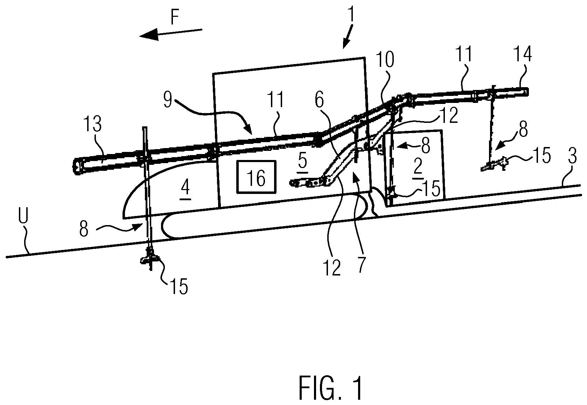

Figur 1 zeigt schematisch einen Straßenfertiger 1 mit einer höheneinstellbaren Einbaubohle 2 zum Verlegen einer neuen Einbauschicht 3 auf einem Untergrund U. Der Straßenfertiger 1 hat einen in Fahrtrichtung F gesehen vorne angeordneten Gutbunker 4, aus welchem Einbaugut mittels einer nicht gezeigten Materialfördereinrichtung zum Verbau nach hinten zur Einbaubohle 2 transportiert wird.

An einem Chassis 5 des Straßenfertigers 1 ist ein beweglicher Bohlenholm 6 der Einbaubohle 2 befestigt. Ferner ist am Bohlenholm 6 eine Haltevorrichtung 7 zum Tragen und Positionieren mehrerer Sensormodule 8 befestigt. Figur 1 zeigt, dass die Haltevorrichtung 7 ein Tragarmmodul 9 besitzt, welches entlang der Fahrtrichtung F des Straßenfertigers 1 ausgerichtet ist. Das Tragarmmodul 9 verfügt über einen Mittelbalken 10 und an dessen Enden befestigten Erweiterungsbalken 11. Der Mittelbalken 10 ist anhand zweier Schwenkarme 12 am Bohlenholm 6 befestigt. Dabei wird der Mittelbalken 10 von den beiden Schwenkarmen 12 geneigt zur Horizontalen seitlich am Straßenfertiger 1 getragen. Die beiden Erweiterungsbalken 11 an den Enden des Mittelbalkens 10 verlaufen zueinander parallel, sodass der Mittelbalken 10 zusammen mit den Erweiterungsbalken 11 eine Stufenform ausbildet. Die Stufenform sorgt dafür, dass die Haltevorrichtung 7 nicht mit der Einbaubohle 2 kollidiert.

Ferner zeigt Figur 1, dass in Fahrtrichtung F gesehen an einem vorderen Erweiterungsbalken 13, am Mittelbalken 10 sowie an einem hinteren Erweiterungsbalken 14 jeweils ein Sensormodul 8 befestigt ist. An jeweiligen Enden der Sensormodule 8 ist eine Sensoreinheit 15 vorgesehen. Die beiden in Fahrtrichtung F gesehen vorderen Sensormodule 8 sind für eine Abstandsmessung oberhalb des Untergrunds U, auf welchem sich der Straßenfertiger 1 bewegt, positioniert. Das am hinteren Erweiterungsbalken 14 befestigte Sensormodul 8 ist über der neuen Einbauschicht 3 positioniert, um zu dieser eine Abstandsmessung durchzuführen. Anhand der jeweiligen Abstandsmessungen kann eine im Straßenfertiger 1 ausgebildete Steuereinheit 16 eine automatische Nivellierung der Einbaubohle 2 durchführen, um selbst bei einer Fahrt auf einem unebenen Untergrund U eine ebene Einbauschicht 3 herzustellen.

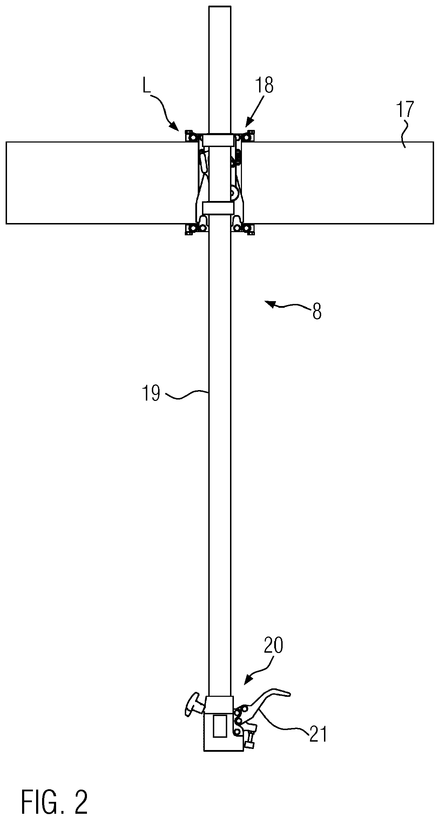

Figur 2 zeigt einen Ausschnitt der Haltevorrichtung 7 aus Figur 1. An einem Balken 17, welcher beispielsweise ein Segment des in Figur 1 gezeigten Mittelbalkens und/oder der Erweiterungsbalken 11, 13, 14 bildet, ist zum Tragen des Sensormoduls 8 eine Kulisse 18 befestigt. Die Kulisse 18 bildet gemäß Figur 2 zusammen mit dem Balken 17 eine Linearführung L aus. Dadurch lässt sich das an die Kulisse 18 gekoppelte Sensormodul 8 entlang des Balkens 17 verschieben.

Ferner zeigt Figur 2, dass das Sensormodul 8 ein an die Kulisse 18 gekoppeltes Sensorrohr 19 aufweist, das an seinem zur Kulisse 18 abgewandten Ende eine Sensoraufnahme 20 umfasst. Die Sensoraufnahme 20 ist zum Befestigen der Sensoreinheit 15 mit einem Hebelklemmgetriebe 21 ausgestattet. Das Hebelklemmgetriebe 21 ist dazu konfiguriert, die Sensoreinheit 15 mittels einer vorbestimmten Klemmkraft in der Sensoraufnahme 20 zu halten.

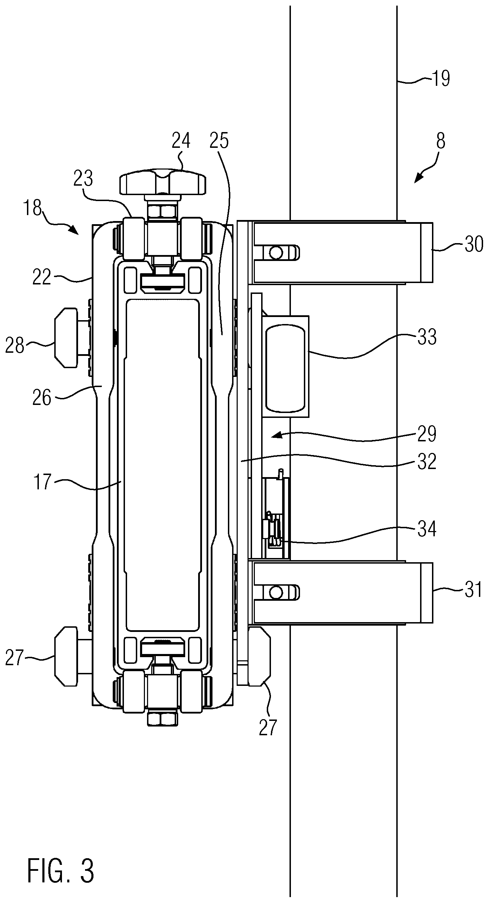

Figur 3 zeigt die Darstellung aus Figur 2 in einer Schnittperspektive durch den Balken 17 hindurch. Der Balken 17 ist gemäß Figur 3 als hohles Formprofil ausgebildet. Die Kulisse 18 bildet eine Rahmeinheit 22, die den Balken 17 umschließt. Ferner wird in der Figur 3 gezeigt, dass die Kulisse 18 in Bilddarstellung gesehen oben und unten mehrere Laufrollen 23 umfasst, die jeweils auf einer Oberfläche des Balkens 17 abrollen können, um die Kulisse 18 entlang des Balkens 17 reibungsarm verschieben zu können. Des Weiteren verfügt die Kulisse 18 über eine Klemmeinheit 24, die gemäß Figur 3 zum Aufbringen einer Klemmkraft zum Fixieren der Kulisse 18 relativ zum Balken 17 als Schraubverbildung ausgebildet ist. Die Klemmeinheit kann jedoch auch als ein Hebelklemmgetriebe, insbesondere als Exzenterschnellspanner ausgebildet sein, um eine vorbestimmte Klemmkraft zur Fixierung der Kulisse 18 an dem Balken 17 zu erzeugen.

Gemäß Figur 3 ist das Sensormodul 8 an einer rechten Seite der Kulisse 18 befestigt. Dafür besitzt die Kulisse 18 eine Aufnahme 25, die insbesondere als zum Chassis 5 des Straßenfertigers 1 abgewandte Aufnahme 25 vorliegt. Damit das Sensormodul 8 beidseitig an der Kulisse 18 befestigt werden kann, umfasst die Kulisse 18 außer der Aufnahme 25 eine weitere, der Aufnahme 25 gegenüberliegende Aufnahme 26, die insbesondere als zum Chassis 5 des Straßenfertigers 1 hingewandte Aufnahme 26 vorliegt. Die jeweiligen Aufnahmen 25, 26 bilden einen Teil der Rahmeneinheit 22 und sind gemäß Figur 3 jeweils Seite an Seite der längeren Seiten des Balkens 17 ausgerichtet.

In Figur 3 verfügen die Aufnahmen 25, 26 jeweils über einen unteren Montagevorsprung 27 sowie einen oberen Montagevorsprung 28. Wegen des befestigten Sensormoduls 8 ist in Figur 3 an der Aufnahme 25 lediglich der untere Montagevorsprung 27 zu sehen.

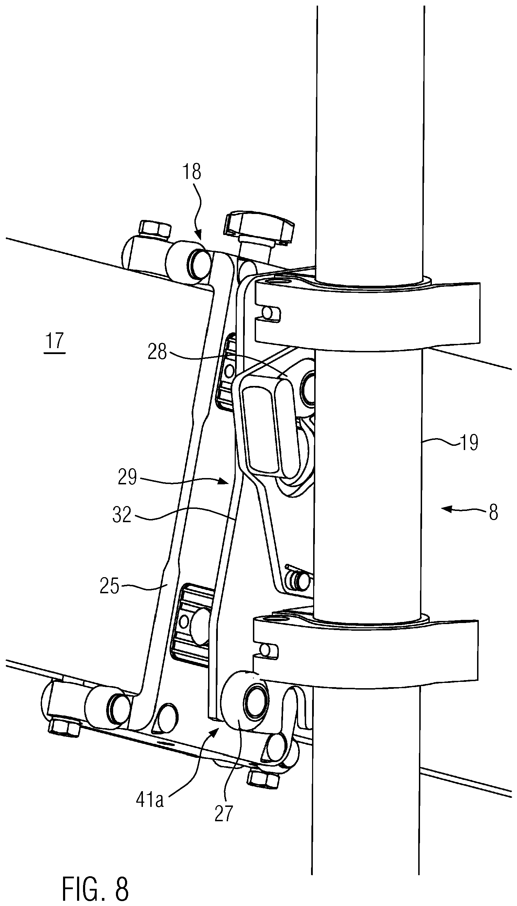

Ferner zeigt Figur 3, dass das Sensormodul 8 das Sensorrohr 19 mittels einer Halterung 29 befestigt und relativ zur Kulisse 18 trägt. Dafür sind an der Halterung 29 eine obere und eine untere Klemmvorrichtung 30, 31 vorgesehen. Die Halterung 29 besitzt eine Befestigungsplatte 32, die in der Aufnahme 25 der Kulisse 18 befestigt ist. Ferner besitzt die Halterung 29 einen Schließhebel 33, welcher mittels einer Feder 34 in einer geschlossenen Stellung (siehe Figur 8) die Befestigungsplatte 32 an die Aufnahme 25 der Kulisse 18 lösbar koppelt. Die in Figur 3 gezeigten Mittel zeigen, dass das Sensormodul 8 beidseitig lösbar an der Kulisse 18 befestigbar ist. Insbesondere kann die Kulisse 18 zusammen mit dem daran gekoppelten Sensormodul 8 entlang dem Balken 7 verschoben werden, um die am Sensormodul 8 befestigte Sensoreinheit 15 entlang der Haltevorrichtung 7 zu verstellen.

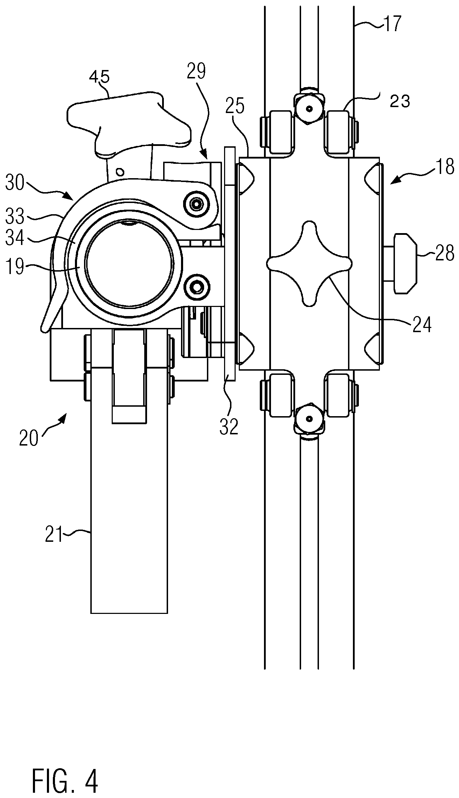

Figur 4 zeigt die Anordnung aus Figur 2 aus der Draufsicht. Insbesondere zeigt Figur 4, dass die obere Klemmvorrichtung 30 zum Befestigen des Sensorrohrs 19 an der Halterung 29 eine Exzenterschnellspanner mit einem Exzenterhebel 33 umfasst. Der Exzenterhebel 33 wirkt auf eine Ringaufnahme 34, in welcher das Sensorrohr 19 aufgenommen ist. Die Sensoraufnahme 20 kann mittels eines Drehknopfs 45 an das Sensorrohr 19 befestigt werden. Der Drehknopf 45 kann als Teil der Sensoraufnahme 20 ausgebildet sein.

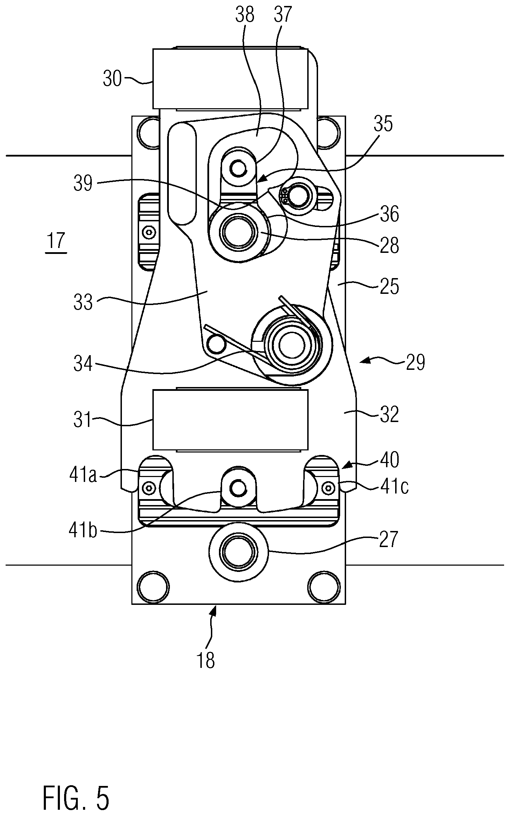

In den folgenden Figuren 5 bis 8 wird im Detail erläutert, wie das Sensormodul 8, insbesondere die dazugehörige Halterung 29 an der Kulisse 18 befestigt werden kann.

Figur 5 zeigt die Halterung 29 ohne Sensorrohr 19. Gemäß Figur 5 ist in der Befestigungsplatte 32 eine Montageöffnung 35 ausgebildet. Die Montageöffnung 35 bildet eine Aufnahme für den oberen Montagevorsprung 28 aus. Dafür besitzt die Montageöffnung 35 eine Aufnahmeöffnung 36, die im Wesentlichen der Größe des oberen Montagevorsprungs 28 entspricht, damit der obere Montagevorsprung 28 durch die Aufnahmeöffnung 36 hindurch passt, um die Halterung 29 an der Aufnahme 25 der Kulisse 18 zu befestigen. Ferner umfasst die Montageöffnung 35 eine Fixieröffnung 37, die insgesamt kleiner ausgebildet ist als die Aufnahmeöffnung 36. Zum Befestigen der Halterung 29 an der Kulisse 18 wird zunächst die Montageöffnung 35 mit ihrer Aufnahmeöffnung 36 auf den oberen Montagevorsprung 28 aufgeschoben. Dies geschieht in orthogonaler Richtung zur Bildebene der Figur 5. Der obere Montagevorsprung 28 der Figur 5 ragt dann durch die Aufnahmeöffnung 36 sowie eine im Schließhebel 33 ausgebildete Ausnehmung 38 hindurch. Des Weiteren zeigt Figur 5, dass der Schließhebel 33 einen Vorsprung 39 ausbildet, der in die Ausnehmung 38 hineinragt. Der Vorsprung 39 ist gemäß Figur 5 vom oberen Montagevorsprung 28 entfernt, weil sich der Schließhebel 33 noch in der geöffneten Stellung befindet.

Weiterhin zeigt Figur 5, dass an der Befestigungsplatte 32 ein Montagekranz 40 ausgebildet ist. Der Montagekranz 40 verfügt über mehrere in radialer Anordnung ausgebildete Vertiefungen 41a, b, c. Die jeweiligen Vertiefungen 41a, b, c können auf den unteren Montagevorsprung 27 der Halterung 29 aufgeschoben werden, um das Sensormodul 8 relativ zur Kulisse 18 in verschiedenen Montageausrichtungen zu befestigen.

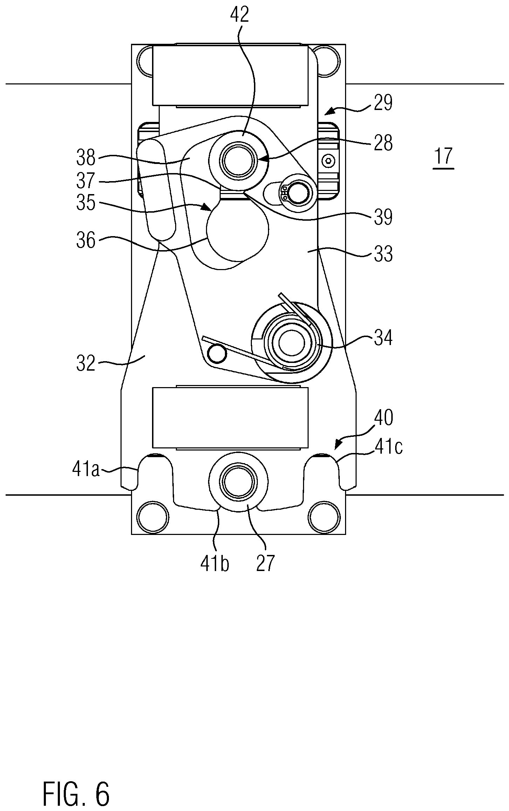

Aus der in Figur 5 gezeigten Darstellung heraus lässt sich die Halterung 29 in die gemäß Figur 6 gezeigte Darstellung bringen, um die Halterung 29 an der Kulisse 18 zu fixieren.

Figur 6 zeigt die Halterung 29, wenn sie aus der in Figur 5 gezeigten Vor-Montageposition entlang der zu ihr gewandten Aufnahme 25, 26 der Kulisse 18 in Bildebene betrachtet nach unten verschoben ist. Dadurch wird der obere Montagevorsprung 28 in die Fixieröffnung 37 der Aufnahmeöffnung 36 geschoben, während gleichzeitig die Vertiefung 41b des Montagekranzes 40 auf den unteren Montagevorsprung 27 geschoben wird. Der federvorbelastete Schließhebel 33 schnappt dabei in eine geschlossene Stellung, in welcher der Vorsprung 39 derart von unten an den oberen Montagevorsprung 28 koppelbar ist, dass die Halterung 29 an der Kulisse 18 gegen Herausfallen gesichert ist. Dabei ragt ein Kopfteil 42 des oberen Montagevorsprungs durch die Fixieröffnung 37 der Montageöffnung 35 sowie durch die Ausnehmung 38 des Schließhebels 33 hindurch.

Zum Entfernen der Halterung 29 von der Kulisse 18 wird der Schließhebel 33 aus der in Figur 6 gezeigten geschlossenen Stellung im Uhrzeigersinn in die in Figur 5 gezeigte geöffnete Stellung gedreht, die Halterung 29 wird dann in Bildebene betrachtet nach oben geschoben, sodass die Aufnahmeöffnung 36 über dem oberen Montagevorsprung 28 ausgerichtet ist und außerdem die Vertiefung 41b vom unteren Montagevorsprung 27 entkoppelt wird. Die Halterung ist nun insgesamt entkoppelt und das Sensormodul kann aus der Bildebene heraus aus der Aufnahme 25 der Kulisse 18 herausgehoben werden.

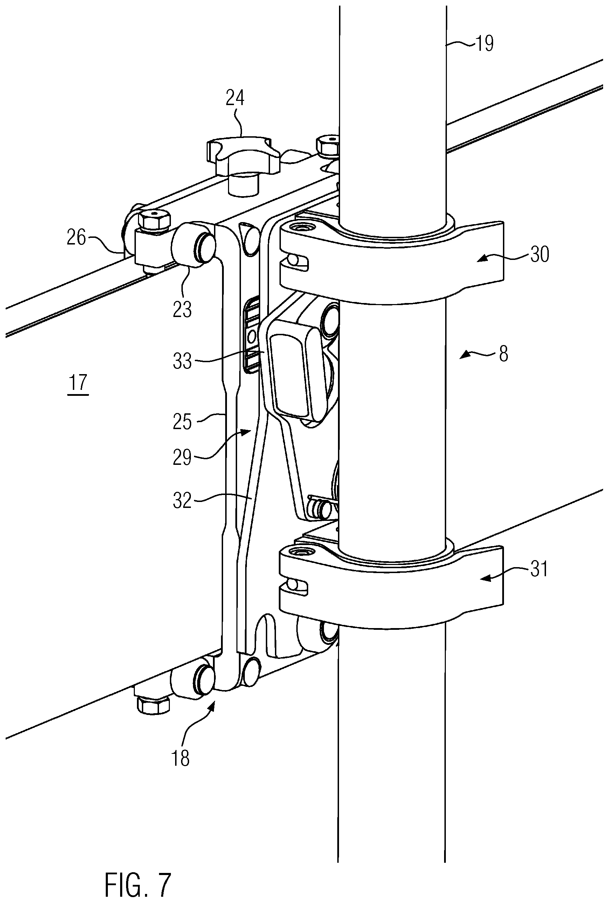

Figur 7 zeigt eine perspektivische Darstellung der Anordnung aus Figur 6 einschließlich des befestigten Sensorrohrs 19 an der Halterung 29. Es wird gezeigt, dass die Halterung 29 am Sensorrohr 19 befestigt bleiben kann, wenn das Sensormodul 8 als Gesamtheit an einer anderen Kulisse 18 bzw. an der in Figur 7 zur Aufnahme 25 abgewandten Aufnahme 26 montiert werden soll. Zum Verschieben der Kulisse 18 kann das Sensormodul 8 daran befestigt bleiben. Dadurch lässt sich das Sensormodul 8 schnell an einer gewünschten Stelle an der Haltevorrichtung 7 montieren.

Figur 8 zeigt das Sensormodul 8 in einer geneigten Montagestellung relativ zum Balken 17 bzw. zur Kulisse 18. Dabei ist der untere Montagevorsprung 27 auf die Vertiefung 41a aufgeschoben. Die Befestigungsplatte 32 ist bei dieser Darstellung um einen vorbestimmten Winkel relativ zur Vertikalen entgegen dem Uhrzeigersinn gedreht. Dadurch kann eine Schräglage des Balkens 17 bzw. der daran gekoppelten Kulisse 18 ausgeglichen werden, um das Sensormodul 8 weiterhin senkrecht oberhalb des Untergrunds U zu positionieren.

Je nach geneigter Lage des Balkens 17 bzw. in Abhängigkeit davon, ob die Haltevorrichtung 7 links und/oder rechts in Fahrtrichtung F gesehen am Chassis 5 des Straßenfertigers 1 befestigt ist, kann die Halterung 29 an den Vertiefungen 41a, b, c mit dem unteren Montagevorsprung 27 gekoppelt werden, um das Sensormodul 8 wie gewünscht auszurichten.

Bei der vorliegenden Erfindung kann die am Balken 17 verschiebbar befestigte Kulisse einerseits das daran gekoppelte Sensormodul 8 entlang des Balkens 17 verschieben und andererseits das Sensormodul 8 in unterschiedlichen Montageausrichtungen fixieren. Weil diese Doppelfunktion werkzeuglos durchführbar ist, kann die Arbeit für einen Einsteller erheblich erleichtert werden. Die bei der Erfindung verwendete Haltevorrichtung 7 lässt sich an unterschiedlichen Straßenfertigertypen anbauen. Hinzu kommt, dass ein Einsatz der Haltevorrichtung 7 ebenfalls an einem Beschickerfahrzeug vorstellbar ist.

## Patentansprüche

1. Straßenfertiger (1) mit einer an einem Chassis (5) des Straßenfertigers (1) befestigten, höheneinstellbaren Einbaubohle (2) zum Verlegen einer Einbauschicht (3) und mindestens einer Haltevorrichtung (7) zum Tragen und Positionieren mindestens einer Sensoreinheit (15), wobei die Haltevorrichtung (7) mindestens ein Tragarmmodul (9), mindestens ein Sensormodul (8), umfassend die Sensoreinheit (15), sowie mindestens eine am Tragarmmodul (9) verschiebbar positionierbare Kulisse (18) aufweist, an welcher das Sensormodul (8) befestigt ist und welche das Sensormodul (8) am Tragarmmodul (9) befestigt, wobei das Sensormodul (8) eine Halterung (29) mit einer Befestigungsplatte (32) aufweist,
**dadurch gekennzeichnet, dass** die Befestigungsplatte (32) werkzeuglos lösbar an der Kulisse (18) befestigt ist, und dass das Sensormodul (8) relativ zur Horizontalen in verschiedenen Montagewinkeln an der Kulisse (18) befestigbar ist.

2. Straßenfertiger nach Anspruch 1, **dadurch gekennzeichnet, dass** die Kulisse (18) und das Tragarmmodul (9) eine Linearführung (L) ausbilden.

3. Straßenfertiger nach einem der vorigen Ansprüche, **dadurch gekennzeichnet, dass** die Kulisse (18) als Schlitten auf einem als Führung ausgebildeten Balken (17) des Tragarmmoduls (9) verschiebbar ist.

4. Straßenfertiger nach einem der vorigen Ansprüche, **dadurch gekennzeichnet, dass** die Kulisse (18) als eine Rahmeneinheit (22) ausgebildet ist.

5. Straßenfertiger nach einem der vorigen Ansprüche, **dadurch gekennzeichnet, dass** die Kulisse (18) mindestens eine Laufrolle (23) aufweist.

6. Straßenfertiger nach einem der vorigen Ansprüche, **dadurch gekennzeichnet, dass** die Kulisse (18) zur lösbaren Befestigung der Halterung (29) des Sensormoduls (8) eine zum Chassis (5) des Straßenfertigers (1) hingewandte Aufnahme (26) und/oder eine dem Chassis (5) des Straßenfertigers (1) abgewandte Aufnahme (25) aufweist.

7. Straßenfertiger nach einem der vorigen Ansprüche, **dadurch gekennzeichnet, dass** die Kulisse (18) integral derart an der Haltevorrichtung (7) montiert ist, dass sich die Kulisse (18) zumindest werkzeuglos nicht vom Tragarmmodul (9) lösen lässt.

8. Straßenfertiger nach einem der vorigen Ansprüche, **dadurch gekennzeichnet, dass** die Halterung (29) einen drehbar an der Befestigungsplatte (32) gelagerten Schließhebel (33) aufweist, welcher dazu konfiguriert ist, die Halterung (29) an der Kulisse (18) zu sichern.

9. Straßenfertiger nach Anspruch 8, **dadurch gekennzeichnet, dass** der Schließhebel (33) mittels Federkraft in eine geschlossene Stellung vorgespannt ist, wobei der Schließhebel (33) entgegen der Federkraft aus der geschlossenen Stellung heraus in eine offene Stellung bewegbar ist.

10. Straßenfertiger nach Anspruch 8 oder 9, **dadurch gekennzeichnet, dass** eine Drehachse des Schließhebels (33) orthogonal zu einer Plattenebene der Befestigungsplatte (32) ausgerichtet ist.

11. Straßenfertiger nach einem der vorigen Ansprüche, **dadurch gekennzeichnet, dass** die Kulisse mindestens einen unteren und mindestens einen oberen Montagevorsprung (27, 28) aufweist, wobei die Befestigungsplatte (32) einen Montagekranz (40) und eine Montageöffnung (35) aufweist, und wobei der untere Montagevorsprung (27) an dem Montagekranz (40) und der obere Montagevorsprung (28) in der Montageöffnung (35) der Befestigungsplatte (32) befestigbar sind.

12. Straßenfertiger nach Anspruch 11, **dadurch gekennzeichnet, dass** der Montagekranz (40) mehrere Vertiefungen (41a, b, c) in radialer Anordnung aufweist, die jeweils einzeln am unteren Montagevorsprung (27) koppelbar sind, um die Halterung (29) in verschiedenen Montageausrichtungen an der Kulisse (18) zu befestigen.

13. Straßenfertiger nach einem der vorigen Ansprüche, **dadurch gekennzeichnet, dass** die Halterung (29) mindestens eine Klemmvorrichtung (30, 31) umfasst, die für eine vorbestimmte Klemmkraft ausgebildet ist, wenn die Klemmvorrichtung (30, 31) in einer geschlossenen Stellung ist.

## Claims

1. Road finishing machine (1) with a height-adjustable screed (2) mounted to a chassis (5) of the road finishing machine (1) for laying a paving layer (3), and at least one retainer device (7) for supporting and positioning at least one sensor unit (15), the retainer device (7) comprising at least one supporting arm module (9), at least one sensor module (8) including the sensor unit (15), and at least one link (18) that may be movably positioned at the supporting arm module (9) to which the sensor module (8) may be mounted and which mounts the sensor module (8) to the supporting arm module (9), wherein the sensor module (8) comprises a retainer (29) with a mounting plate (32), **characterized in that** the mounting plate (32) is without tools releasably mounted to the link (18), and that the sensor module (8) may be mounted to the link (18) in various assembly angles with respect to the horizontal line.

2. Road finishing machine according to claim 1, **characterized in that** the link (18) and the supporting arm module (9) form a linear guide (L).

3. Road finishing machine according to one of the preceding claims, **characterized in that** the link (18) is movable as a slide on a beam (17) of the supporting arm module (9) embodied as a guide.

4. Road finishing machine according to one of the preceding claims, **characterized in that** the link (18) is embodied as a frame unit (22).

5. Road finishing machine according to one of the preceding claims, **characterized in that** the link (18) comprises at least one guide roller (23).

6. Road finishing machine according to one of the preceding claims, **characterized in that** the link (18) comprises a seat (26) facing the chassis (5) of the road finishing machine (1), and/or a seat (25) facing away from the chassis (5) of the road finishing machine (1) for releasably mounting the retainer (29) of the sensor module (8).

7. Road finishing machine according to one of the preceding claims, **characterized in that** the link (18) is integrally mounted to the retainer device (7).

8. Road finishing machine according to one of the preceding claims, **characterized in that** the retainer (29) comprises a locking lever (33) rotatably mounted to the mounting plate (32) which is configured to secure the retainer (29) to the link (18).

9. Road finishing machine according to claim 8, **characterized in that** the locking lever (33) is pretensioned into a closed position by means of spring force, wherein the locking lever (33) may be moved against the spring force from the closed position into an open position.

10. Road finishing machine according to claim 8 or 9, **characterized in that** an axis of rotation of the locking lever (33) is oriented orthogonally to a plate plane of the mounting plate (32).

11. Road finishing machine according to one of the preceding claims, **characterized in that** the link comprises at least one lower and at least one upper assembly projection (27,28), wherein the lower assembly projection (27) may be mounted to an assembly rim (40) and the upper assembly projection (28) may be mounted in an assembly opening (35) of the mounting plate (32).

12. Road finishing machine according to claim 11, **characterized in that** the assembly rim (40) comprises a plurality of indentations (41a, b, c) in a radial arrangement which may be coupled each individually to the lower assembly projection (27) to mount the retainer (29) in different assembly orientations at the link (18).

13. Road finishing machine according to one of the preceding claims, **characterized in that** the retainer (29) comprises at least one clamping device (30, 31) designed for a predetermined clamping force when the clamping device (30, 31) is in a closed position.

## Revendications

1. Finisseur de route (1) comprenant une table lisseuse de pose de revêtement (2) réglable en hauteur, fixée sur un châssis (5) du finisseur de route (1) et destinée à la pose d'une couche de revêtement (3), et au moins un dispositif de support (7) pour supporter et positionner au moins une unité de capteur (15), finisseur de route
dans lequel le dispositif de support (7) présente au moins un module de bras de support (9), au moins un module de capteur (8) comprenant l'unité de capteur (15), ainsi qu'au moins une coulisse (18), qui peut être positionnée par coulissement sur ledit au moins un module de bras de support (9) et sur laquelle est fixé le module de capteur (8), et qui fixe le module de capteur (8) au module de bras de support (9), et
dans lequel le module de capteur (8) présente un système de maintien (29) avec une plaque de fixation (32),
**caractérisé en ce que** la plaque de fixation (32) est fixée à la coulisse (18) de manière démontable sans outil, et **en ce que** le module de capteur (8) peut être fixé à la coulisse (18), selon différents angles de montage par rapport à l'horizontale.

2. Finisseur de route selon la revendication 1, **caractérisé en ce que** la coulisse (18) et le module de bras de support (9) forment un guidage linéaire (L).

3. Finisseur de route selon l'une des revendications précédentes, **caractérisé en ce que** la coulisse (18) peut coulisser, en tant que chariot, sur une poutrelle (17) du module de bras de support (9) réalisée sous forme de glissière de guidage.

4. Finisseur de route selon l'une des revendications précédentes, **caractérisé en ce que** la coulisse (18) est réalisée sous la forme d'une unité à cadre (22).

5. Finisseur de route selon l'une des revendications précédentes, **caractérisé en ce que** la coulisse (18) présente au moins un galet de roulement (23) .

6. Finisseur de route selon l'une des revendications précédentes, **caractérisé en ce que** la coulisse (18) présente, pour la fixation amovible du système de maintien (29) du module de capteur (8), un élément d'accueil (26) dirigé vers le châssis (5) du finisseur de route (1), et/ou un élément d'accueil (25) d'orientation opposée à celle dirigée vers le châssis (5) du finisseur de route (1).

7. Finisseur de route selon l'une des revendications précédentes, **caractérisé en ce que** la coulisse (18) est intégralement montée sur le dispositif de support (7) de façon telle, que la coulisse (18) ne puisse pas être démontée, tout au moins sans outil, du module de bras de support (9).

8. Finisseur de route selon l'une des revendications précédentes, **caractérisé en ce que** le système de maintien (29) présente un levier de fermeture (33) monté rotatif sur la plaque de fixation (32) et configuré pour bloquer le système de maintien (29) sur la coulisse (18).

9. Finisseur de route selon la revendication 8, **caractérisé en ce que** le levier de fermeture (33) est précontraint dans une position de fermeture au moyen d'une force de ressort, le levier de fermeture (33) pouvant être déplacé hors de sa position de fermeture, à l'encontre de la force de ressort, vers une position d'ouverture.

10. Finisseur de route selon la revendication 8 ou la revendication 9, **caractérisé en ce qu'**un axe de rotation du levier de fermeture (33) est orienté orthogonalement à un plan de plaque de la plaque de fixation (32).

11. Finisseur de route selon l'une des revendications précédentes, **caractérisé en ce que** la coulisse présente au moins une protubérance de montage inférieure et au moins une protubérance de montage supérieure (27, 28), la plaque de fixation (32) présentant une couronne de montage (40) et une ouverture de montage (35), et la protubérance de montage inférieure (27) pouvant être fixée à la couronne de montage (40), et la protubérance de montage supérieure (28) dans l'ouverture de montage (35) de la plaque de fixation (32).

12. Finisseur de route selon la revendication 11, **caractérisé en ce que** la couronne de montage (40) comporte plusieurs encoches (41a, b, c) selon un agencement radial, qui peuvent être couplées respectivement de manière individuelle à la protubérance de montage inférieure (27), en vue de fixer le système de maintien (29) selon différentes orientations de montage, à la coulisse (18).

13. Finisseur de route selon l'une des revendications précédentes, **caractérisé en ce que** le système de maintien (29) comprend au moins un dispositif de serrage (30, 31), qui est conçu pour une force de serrage prédéterminée lorsque le dispositif de serrage (30, 31) se trouve dans une position de fermeture.
